# EUROPÄISCHE PATENTSCHRIFT

(11) **EP 0 750 536 B1**
(45) Veröffentlichungstag und Bekanntmachung des Hinweises auf die Patenterteilung: **20.08.1997**
(21) Anmeldenummer: 95911271.5
(22) Anmeldetag: 27.02.1995
(51) Int. Cl.: B23C 3/12, B23Q 7/00, B27D 5/00

(54) **KANTENANLEIMMASCHINE MIT EINER FRÄSVORRICHTUNG**
EDGE GLUING MACHINE WITH A MILLING DEVICE
MACHINE A PLAQUER LES CHANTS AVEC DISPOSITIF DE FRAISAGE

(30) Priorität: 15.03.1994 DE 4408596
(43) Veröffentlichungstag der Anmeldung: 02.01.1997
(73) Patentinhaber: REICH SPEZIALMASCHINEN GmbH, 72622 Nürtingen (DE)
(72) Erfinder: HENZLER, Roland, D-72622 Raidwangen (DE); BRANDSTETTER, Helmut, D-72622 Nürtingen (DE)
(74) Vertreter: Wössner, Gottfried
(86) Internationale Anmeldenummer: EP9500706
(87) Internationale Veröffentlichungsnummer: WO9524984

(56) Entgegenhaltungen:
- EP-A- 0 538 513
- EP-A- 0 602 308
- DE-A- 2 405 837

## Beschreibung

Die Erfindung bezieht sich auf eine Kantenanleimmaschine mit einer Fräsvorrichtung gemäß dem Oberbegriff von Anspruch 1.

Aus der EP-A-0 395 996 ist eine mit einer Fräsvorrichtung versehene Kantenanleimmaschine bekannt, bei der an den Ecken der plattenförmigen Werkstücke die überstehenden Umleimer mit einem Fräswerkzeug profiliert werden können. Dazu ist das Fräswerkzeug radial verschiebbar auf einem Schwenkorgan befestigt, das sich zur Bearbeitung der Ecken dreht, so daß das Fräswerkzeug die ganze zu bearbeitende Ecke umfährt.

Aufgabe der vorliegenden Erfindung ist daher die Schaffung einer Kantenanleimmaschine der eingangs genannten Art, mit der die Bearbeitung der Ecken in einfacher Weise während des Durchlaufs der Werkstücke erfolgen kann.

Die Aufgabe wird erfindungsgemäß durch das im kennzeichnenden Teil des Anspruchs 1 angegebene Merkmal gelöst.

Durch die mechanische Kopplung der Verschiebebewegung des Schlittens mit der Schwenkbewegung des Schwenkorgans entfällt ein gesonderter Antriebsmotor für die Schwenkbewegung.

So kann die Fräsvorrichtung bei einer bevorzugten Ausführungsform mit einem Schlitten auf Führungsorganen parallel zur Förderrichtung des Werkstücks verschiebbar gelagert sein, so daß die Bearbeitung der Ecken während des Durchlaufs des Werkstücks erfolgt. Dabei kann der Schlitten mit einem Antriebsmotor so verschoben werden, daß zunächst während der ersten Hälfte der Verschiebebewegung des Schlittens dieser synchron zur Werkstückbewegung bewegt wird, wobei das Fräswerkzeug die vorlaufende Ecke des Werkstücks bearbeitet. Erreicht die nachlaufende Ecke das in der Mitte der Führungsorgane verharrende Fräswerkzeug, dann wird der Schlitten wieder synchron zum Werkstück bewegt und das Fräswerkzeug bearbeitet die nachlaufende Ecke des Werkstücks. Anschließend erfolgt ein beschleunigter Rücklauf des Schlittens.

Bei einer weiteren Ausführungsform kann der Schlitten zur Bearbeitung der vorlaufenden Ecke auch über die gesamte Länge der Führungsorgane verschoben werden. Anschließend erfolgt eine beschleunigte Rückführung und danach eine Bearbeitung der nachlaufenden Ecke wieder während einer Verschiebebewegung des Schlittens synchron mit dem Werkstück über die gesamte Länge der Führungsorgane.

Neben der Bearbeitung der Ecken des Werkstücks ist es mit der erfindungsgemäßen Fräsvorrichtung auch möglich, die gesamten Längskanten des Werkstücks im Durchlauf zu bearbeiten.

Für die Verschiebebewegung des Schlittens wird der Antriebsmotor bevorzugt über einen Frequenzwandler betrieben, so daß eine stufenlose Ansteuerung über einen Drehweggeber und eine einstellbare Rücklaufgeschwindigkeit möglich ist. Auch ist es möglich, den Schlitten mit einem druckluftbetriebenen Betätigungszylinder zu verschieben.

Anstelle von Druckluft können die verschiedenen Betätigungszylinder auch mit Drucköl betrieben werden.

Zur Ausführung der Schwenkbewegung des Schwenkorgans kann ein Antriebsorgan in Form z.B. einer Antriebskette vorgesehen sein, die mit ihren freien Enden mit dem Grundgestell verbunden ist und ein Antriebsrad für das Schwenkorgan teilweise umschlingt. Damit wird die Drehbewegung des Schwenkorgans zwangsweise über die Verschiebebewegung des Schlittens ausgeführt und es ist ein sicheres und gleichbleibendes Drehen des Schwenkorgans bei unterschiedlichen Geschwindigkeiten gewährleistet.

Zur einwandfreien Profilierung der Ecke ist es wichtig, daß die Achse des Schwenkorgans so eingestellt wird, daß sie im Innern des der vor- bzw. nachlaufenden Schmalfläche benachbarten Bereichs des Werkstücks liegt, vorzugsweise in dessen Mitte und um die halbe Werkstückdicke von der Schmalfläche entfernt.

Diese Einstellung geschieht in bekannter Weise von Hand, was bei einer Kantenanleimmaschine mit kontinuierlicher Bearbeitung der Werkstücke einen zusätzlichen Arbeitsaufwand darstellt und den Arbeitsfluß unterbricht.

Die Einstellung des Schwenkorgans - und damit des Fräswerkzeugs - auf verschiedene Werkstückdicken in selbsttätiger Weise wird vorzugsweise mittels Verschiebeorganen zur Höhenverstellung bewerkstelligt, welche von einer Brücke aus steuerbar sind, welche selbst in der Höhe verschiebbar an dem Grundgestell angeordnet ist.

Bei einer vorteilhaften Ausführungsform der Erfindung erfolgt die Einstellung des Gehäuses mit Schwenkorgan über Druckluftzylinder, die am Gehäuse angreifen und von mit der Brücke verbundenen Endschaltern steuerbar sind. Diese Brücke wird bekanntlich zur Einstellung auf eine bestimmte Werkstückdicke gegen das Grundgestell über von Hand betätigbare Antriebsmittel verschoben, womit dann gleichzeitig auch die Einstellung der Fräsvorrichtung erfolgt. Diese Steuerung kann entweder stufenlos erfolgen, es ist auch möglich, die Höheneinstellung des Gehäuses in vier Höhenstufen vorzunehmen, die sich der Werkstückdicke anpassen.

Zur Einstellung des Abstandes der Schwenkachse von den Schmalflächen des Werkstücks können wieder Sensoren und Steuerorgane vorgesehen sein, die diesen Abstand der Werkstückdicke anpassen.

Zur Höhenverschiebung des Gehäuses mit Schwenkorgan kann auch ein wieder von Endschaltern steuerbarer Elektromotor vorgesehen sein, der eine mit dem Gehäuse zusammenwirkende Spindel antreibt. Ebenso ist es möglich, das Gehäuse mit einem Hebel, der mit der Brücke verbunden ist, in die gewünschte Stellung zu verschieben.

In den Unteransprüchen sind weitere vorteilhafte Merkmale der Erfindung gekennzeichnet.

Im folgenden ist ein Ausführungsbeispiel der Erfindung unter Bezugnahme auf die Zeichnungen näher beschrieben. Es zeigen:
- Fig. 1: eine Kantenanleimmaschine mit Fräsvorrichtung, von der Seite;
- Fig. 2: eine Fräsvorrichtung vergrößert, von der Seite.

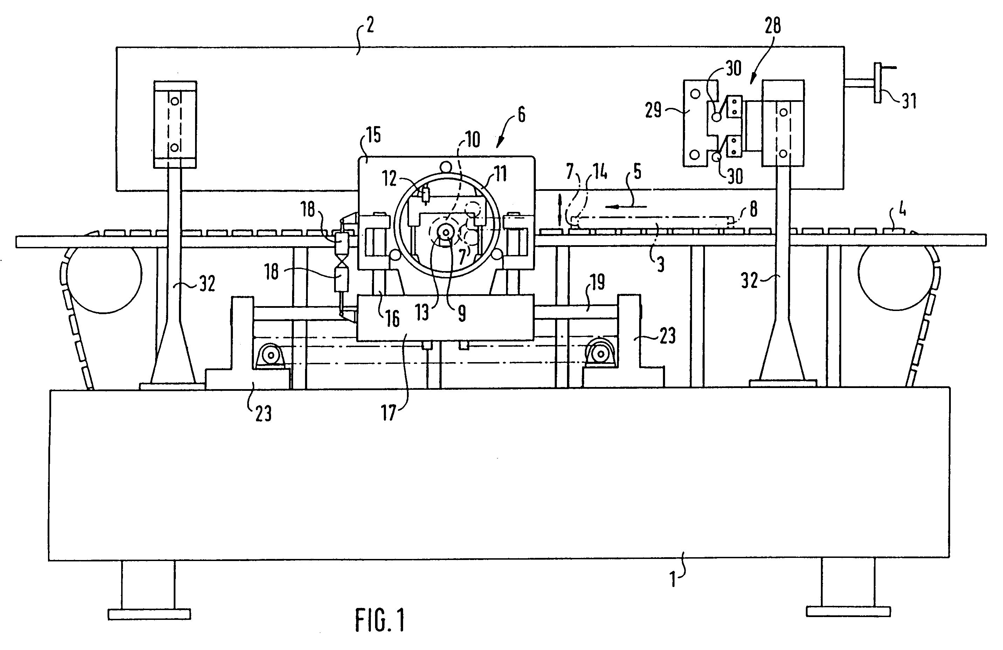

Die in Fig. 1 dargestellte Kantenanleimmaschine besteht in bekannter Weise aus einem Grundgestell 1, an der eine Brücke 2 in der Höhe verschiebbar gelagert ist.

Das Werkstück 3 wird mit einer Förderkette 4 in Richtung von Pfeil 5 bewegt, wobei während der Vorschubbewegung die verschiedenen Arbeitsvorgänge, wie Anleimen des Umleimers, Fräsen der Kanten und Ecken, Kappen und Schleifen erfolgt. Der Übersicht halber ist dabei in Fig. 1 lediglich die Fräsvorrichtung 6 dargestellt.

Zur Bearbeitung der Ecken 7 und 8 von Werkstück 3 dient ein Fräswerkzeug 9, das in bekannter Weise mit dem Fräsmotor 10 radial verschiebbar auf einem Schwenkorgan 11 gelagert ist. Es wird dabei mit einem Druckluftzylinder 12 in Richtung Werkstück 3 gepreßt, bis eine zum Fräswerkzeug 9 konzentrische Tastrolle 13 am Werkstück 3 anliegt.

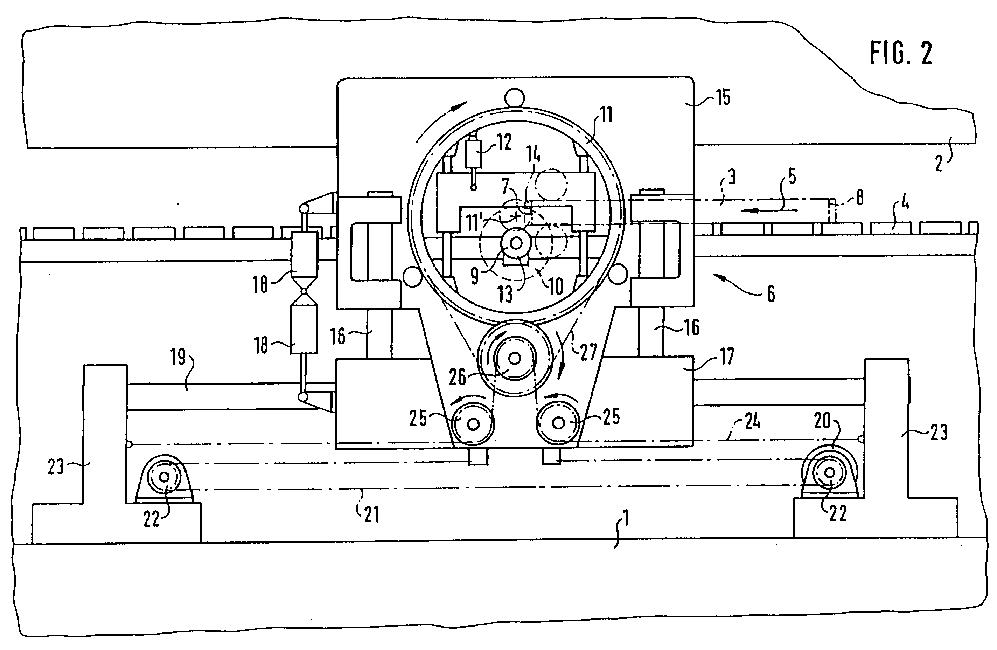

Bei der Schwenkbewegung von Schwenkorgan 11 um eine Schwenkachse 11' umfährt das Fräswerkzeug 9, wie in Fig. 2 strichpunktiert angedeutet, die Ecke 7 und fräst den Umleimer 14 entsprechend dem Profil der Ecke 7 bzw. 8 ab.

Das Schwenkorgan 11 ist auf einem Gehäuse 15 schwenkbar gelagert, wobei das Gehäuse 15 an Führungsstangen 16 an einem Schlitten 17 höhenverschiebbar gelagert ist. Zur Verschiebung von Gehäuse 15 dienen Druckluftzylinder 18, die einerseits mit dem Schlitten 17 verbunden sind und andererseits am Gehäuse 15 angreifen.

Der Schlitten 17 ist auf mit dem Grundgestell 1 verbundenen Führungsorganen 19 parallel zur Förderrichtung 5 verschiebbar gelagert. Er ist von einem Antriebsmotor 20 über eine Antriebskette 21 bewegbar, die zwischen Umlenkrollen 22 an den Konsolen 23 angeordnet ist und deren freie Enden mit dem Schlitten 17 verbunden sind (Fig.2).

Zum Antrieb der Schwenkbewegung von Schwenkorgan 11 dient ein Antriebsorgan 24, dessen freie Enden mit den Konsolen 23 verbunden sind und das über Umlenkrollen 25 zu einem Antriebsrad 26 führt und dieses teilweise umschlingt. Von diesem Antriebsrad 26 führt ein weiteres Antriebsorgan 27 in Form einer Kette zum Schwenkorgan 11, das ebenfalls teilweise umschlungen und somit vom Antriebsrad 26 antreibbar ist.

Wie Fig. 1 zeigt, dient zur Steuerung der Verschiebeorgane 18 ein mit dem Grundgestell 1 verbundener Endschalter 28, mit Schaltelementen 30 und einer mit der Brücke 2 fest verbundenen Schaltplatte 29. Je nach Relativstellung zwischen Endschalter 28 und Schaltplatte 29 werden die beiden Schaltelemente 30 aktiviert und bewirken die Einstellung von Gehäuse 15 durch Betätigung der Verschiebeorgane 18.

Zur Einstellung der an den Säulen 32 verschiebbar gelagerten Brücke 2 dient ein Handrad 31, womit gleichzeitig die Einstellung der Fräsvorrichtung 6 auf die vorliegende Werkstückdicke erfolgt.

Beim Einlaufen von Werkstück 3 aktiviert dieses über eine nicht dargestellte Lichtschranke eine Streckensteuerung, die den Angriffspunkt des Fräswerkzeugs 9 am Werkstück 3 und damit den Abstand der Schwenkachse 11' von Schwenkorgan 11 von der vor- bzw. nachlaufenden Schmalfläche über eine elektronische Verknüpfung so bestimmt, daß die Schwenkachse 11' eine halbe Werkstückdicke von der Schmalfläche entfernt ist.

Gelangt das Werkstück 3 in den Bereich des in der unteren Ruhestellung befindlichen Fräswerkzeugs 9, dann wird dieses mit Tastrolle 13 mittels des Druckluftzylinders 12 gegen das Werkstück 3 geführt. Gleichzeitig setzt der Antriebsmotor 20 den Schlitten 17 synchron zur Förderkette 4 in Bewegung. Das mit dem Werkstück 3 mitlaufende Fräswerkzeug 9 umfährt die Ecke 7 und erreicht dabei die Mitte zwischen den beiden Konsolen 23, wobei der Fräsvorgang abgeschlossen ist und das Fräswerkzeug 9 vom Werkstück 3 abgehoben wird.

In dieser Stellung verharrt das Fräswerkzeug 9, während das Werkstück 3 auf der Förderkette 4 so lange weiterläuft, bis die nachlaufende Ecke 8 in den Bereich von Fräswerkzeug 9 gelangt. Dieses wird wiederum in Richtung Werkstück 3 bewegt und umfährt die nachlaufende Kante 8, wobei der Schlitten 17 über die linke Hälfte der Führungsorgane 19 verschoben wird.

Nach vollständigem Umfahren von Ecke 8 wird Fräswerkzeug 9 von Werkstück 3 abgehoben und der Schlitten 17 mit einer erhöhten Geschwindigkeit in seine Ausgangsstellung zurückbefördert.

Die Schwenkbewegung von Schwenkorgan 11 erfolgt bei der Verschiebebewegung von Schlitten 17 über das Antriebsorgan 24 in bereits beschriebener Weise.

## Patentansprüche

1. Kantenanleimmaschine mit einem Grundgestell (1) und einer auf diesem angeordneten Fördervorrichtung (4) zum Transport zu bearbeitender plattenförmiger Werkstücke (3) sowie mit einer Fräsvorrichtung (9, 10, 11) zur Bearbeitung der Ecken (7,8) der Werkstücke, wobei die Fräsvorrichtung ein an einem Schwenkorgan antreibbar gehaltenes Fräswerkzeug (9) umfaßt, welches mittels des Schwenkorgans (11) um eine Achse schwenkbar ist, welche parallel zur Förderebene der Werkstücke und senkrecht zu deren Förderrichtung (5)angeordnet ist, und wobei die Fräsvorrichtung (9, 10, 11) parallel zur Förderrichtung (5) der Werkstücke (3) verschieblich gelagert ist, wobei die Verschiebebewegung der Fräsvorrichtung (9, 10, 11) mit der Fördergeschwindigkeit der Werkstücke (3) synchronisierbar ist, dadurch gekennzeichnet, daß die Schwenkbewegung des Schwenkorgans (11) mit der Verschiebebewegung der Fräsvorrichtung (9, 10, 11) mechanisch gekoppelt ist.

2. Kantenanleimmaschine nach Anspruch 1, dadurch gekennzeichnet, daß die Fräsvorrichtung (9, 10, 11) auf einem Schlitten (17) angeordnet ist, welcher auf Führungsorganen (19) parallel zur Föderrichtung (5) der Werkstücke (3) verschieblich gelagert ist.

3. Kantenanleimmaschine nach Anspruch 1 oder 2, dadurch gekennzeichnet, daß zum Verschieben der Fräsvorrichtung (9, 10, 11) in Förderrichtung (5) der Werkstücke (3) ein Antriebsmotor (20) vorgesehen ist, welcher die Fräsvorrichtung (9, 10, 11) beim Arbeitshub synchron zu einer Förderkette der Fördervorrichtung bewegt.

4. Kantenanleimmaschine nach einem der Ansprüche 1 bis 3, dadurch gekennzeichnet, daß die Fräsvorrichtung (9, 10, 11) während der Bearbeitung der vorlaufenden Ecke (7) eine erste Verschiebebewegung ausführt und während der Bearbeitung der nachlaufenden Ecke (8) eine sich an die erste anschließende zweite Verschiebebewegung ausführt.

5. Kantenanleimmaschine einem der nach Ansprüche 1 bis 3, dadurch gekennzeichnet, daß die Fräsvorrichtung (9, 10, 11) nach der Bearbeitung der vorlaufenden Ecke (7) vor der Bearbeitung der nachfolgenden Ecke (8) rückgeführt wird.

6. Kantenanleimmaschine nach einem der voranstehenden Ansprüche, dadurch gekennzeichnet, daß für die Ausführung der Schwenkbewegung des Schwenkorgans (11) ein mit dem Grundgestell (1) verbundenes Antriebsorgan (24) vorgesehen ist, welches mit einem die Schwenkbewegung des Schwenkorgans (11) betätigendes Antriebsrad (26) zusammenwirkt.

7. Kantenanleimmaschine nach Anspruch 6, dadurch gekennzeichnet, daß das Antiebsorgan als Band oder Kette ausgebildet ist, dessen freie Enden am Grundgestell (1) verbunden sind, und daß das Band bzw. die Kette das Antriebsrad (26) teilweise umschlingt.

8. Kantenanleimmaschine nach einem der voranstehenden Ansprüche, dadurch gekennzeichnet, daß die Maschine eine am Grundgestell (1) angeordnete Brücke (2) umfaßt, daß die Brücke (2) und die Fräsvorrichtung (9, 10, 11) in der Höhe verschiebbar sind und daß zur Höhenverstellung des Schwenkorgans (11) ein Verschiebeorgan (18) vorgesehen ist, welches von der Brücke (2) steuerbar ist.

9. Kantenanleimmaschine nach Anspruch 8, dadurch gekennzeichnet, daß das Verschiebeorgan (18) als Betätigungszylinder ausgebildet ist.

10. Kantenanleimmaschine nach Anspruch 8, dadurch gekennzeichnet, daß das Verschiebeorgan als Elektromotor ausgebildet ist, welcher eine mit dem Schwenkorgan (11) zusammenwirkende Spindel antreibt.

11. Kantenanleimmaschine nach einem der Ansprüche 8 bis 10, dadurch gekennzeichnet, daß zur Steuerung der Höhenverstellung des Schwenkorgans (11) ein mit dem Grundgestell (1) verbundener Endschalter (28) vorgesehen ist, der durch eine mit der Brücke (2) verbundene Schaltplatte (29) betätigbar ist.

12. Kantenanleimmaschine nach einem der Ansprüche 1 bis 11, dadurch gekennzeichnet, daß das Schwenkorgan (11) so in der Höhe einstellbar ist, daß die Schwenkachse (11') im wesentlichen in der Mitte des zu bearbeitenden Werkstücks (3) liegt und daß eine durch einen Sensor aktivierbare Streckensteuerung vorgesehen ist, welche den Angriffspunkt des Fräswerkzeugs (9) am Werkstück (3) bestimmt.

## Claims

1. Edge banding machine comprising a base frame (1) and a conveyor device (4) arranged thereon for the transportation of plate-like workpieces (3) to be machined, and also comprising a milling device (9, 10, 11) for machining the edges (7, 8) of the workpieces, in which the milling device comprises a milling tool (9) held on a pivoting device so as to be drivable, said milling tool being pivotable by means of the pivoting device (11) about an axis arranged parallel to the plane of transportation of the workpieces and at right angles to their direction of transportation (5), and in which the milling device (9, 10, 11) is mounted for displacement parallel to the direction of transportation (5) of the workpieces (3), the displacement movement of the milling device (9, 10, 11) being synchronizable with the speed of transportation of the workpieces (3), characterized in that the pivoting movement of the pivoting device (11) is mechanically coupled to the displacement movement of the milling device (9, 10, 11).

2. Edge banding machine according to Claim 1, characterized in that the milling device (9, 10, 11) is arranged on a slide (17) mounted on guide members (19) for displacement parallel to the direction of transportation (5) of the workpieces (3).

3. Edge banding machine according to Claim 1 or Claim 2, characterized in that a drive motor (20) is provided for displacing the milling device (9, 10, 11) in the direction of transportation (5) of the workpieces (3), the drive motor (20) moving the milling device (9, 10, 11) synchronously with a conveyor chain (4) of the conveyor device during the working stroke.

4. Edge banding machine according to any one of Claims 1 to 3, characterized in that the milling device (9, 10, 11) performs a first displacement movement during the machining of the leading edge (7) and, during the machining of the trailing edge (8), performs a second displacement movement following on from the first.

5. Edge banding machine according to any one of Claims 1 to 3, characterized in that the milling device (9, 10, 11) is returned after the machining of the leading edge (7) and prior to the machining of the trailing edge (8).

6. Edge banding machine according to any one of the preceding claims, characterized in that a drive member (24), connected to the base frame (1), is provided for executing the pivoting movement of the pivoting device (11), said drive member interacting with a drive wheel (26) which brings about the pivoting movement of the pivoting device (11).

7. Edge banding machine according to Claim 6, characterized in that the drive member is formed as a belt or chain, the free ends of which are connected to the base frame (1), and in that the belt or the chain extends partially around the drive wheel (26).

8. Edge banding machine according to any one of the preceding claims, characterized in that the machine comprises a bridge (2) arranged on the base frame (1), in that the bridge (2) and the milling device (9, 10, 11) are vertically displaceable, and in that a displacement member (18) is provided for the vertical displacement of the pivoting device (11) and is controllable from the bridge (2).

9. Edge banding machine according to Claim 8, characterized in that the displacement member (18) is formed as an actuating cylinder.

10. Edge banding machine according to Claim 8, characterized in that the displacement member is formed as an electric motor which drives a spindle interacting with the pivoting device (11).

11. Edge banding machine according to any one of Claims 8 to 10, characterized in that a limit switch (28) connected to the base frame (1) is provided for controlling the vertical displacement of the pivoting device (11), said switch being actuable by a switching plate (29) connected to the bridge (2).

12. Edge banding machine according to any one of Claims 1 to 11, characterized in that the pivoting device (11) is vertically adjustable in a manner such that the pivot axis (11') is located essentially in the centre of the workpiece (2) to be machined, and in that a linear path control, which can be activated by sensor, is provided for determining the point of engagement of the milling tool (9) on the workpiece (3).

## Revendications

1. Machine à encoller les chants, comprenant un bâti de base (1) et un dispositif de convoyage (4) agencé sur ce bâti et servant à transporter des pièces (3) en forme de plaques qu'il s'agit d'usiner, ainsi qu'un dispositif de fraisage (9, 10, 11) servant à usiner les angles (7, 8) des pièces, ledit dispositif de fraisage comprenant un outil de fraisage (9) monté sur un organe pivotant susceptible d'être entraîné, et qui peut être pivoté, au moyen de cet organe pivotant (11), autour d'un axe qui est disposé parallèlement au plan de convoyage des pièces et perpendiculairement à la direction de convoyage (5) desdites pièces, et le dispositif de fraisage (9, 10, 11) étant monté mobile en translation parallèlement à la direction de convoyage (5) des pièces (3), le mouvement de translation dudit dispositif de fraisage (9, 10, 11) pouvant être synchronisé avec la vitesse de transport des pièces (3), caractérisée en ce que le mouvement de pivotement de l'organe pivotant (11) est couplé mécaniquement au mouvement de translation du dispositif de fraisage (9, 10, 11).

2. Machine à encoller les chants selon la revendication 1, caractérisée en ce que le dispositif de fraisage (9, 10, 11) est disposé sur un chariot (17) qui est monté mobile en translation sur des organes de guidage (19), parallèlement à la direction de convoyage (5) des pièces (3).

3. Machine à encoller les chants selon la revendication 1 ou 2, caractérisée en ce que, pour la translation du dispositif de fraisage (9, 10, 11) dans la direction de convoyage (5) des pièces (3), il est prévu un moteur d'entraînement (20) qui, lors de la course de travail, déplace le dispositif de fraisage (9, 10, 11) en synchronisme avec une chaîne de convoyage du dispositif de convoyage.

4. Machine à encoller les chants selon l'une des revendications 1 à 3, caractérisée en ce que le dispositif de fraisage (9, 10, 11) décrit un premier mouvement de translation pendant l'usinage de l'angle avant (7) et un deuxième mouvement de translation, qui fait suite au premier, pendant l'usinage de l'angle arrière (8).

5. Machine à encoller les chants selon l'une des revendications 1 à 3, caractérisée en ce qu'après l'usinage de l'angle avant (7), le dispositif de fraisage (9, 10, 11) est renvoyé en arrière avant l'usinage de l'angle suivant (8).

6. Machine à encoller les chants selon l'une des revendications précédentes, caractérisée en ce que, pour l'exécution du mouvement de pivotement de l'organe pivotant (11), il est prévu un organe d'entraînement (24) relié au bâti de base (1) et qui coopère avec une roue d'entraînement (26) déterminant le mouvement de pivotement de l'organe pivotant (11).

7. Machine à encoller les chants selon la revendication 6, caractérisée en ce que l'organe d'entraînement est constitué par une bande ou une chaîne dont les extrémités libres sont solidaires du bâti de base (1), et en ce que la bande ou la chaîne passe autour d'une partie de la roue d'entraînement (26).

8. Machine à encoller les chants selon l'une des revendications précédentes, caractérisée en ce que ladite machine comprend un pont (2) agencé sur le bâti de base (1), en ce que le pont (2) et le dispositif de fraisage (9, 10, 11) sont mobiles en coulissement en hauteur, et en ce que, pour le déplacement en hauteur de l'organe pivotant (11), il est prévu un organe de translation (18) qui peut être commandé par le pont (2).

9. Machine à encoller les chants selon la revendication 8, caractérisée en ce que l'organe de translation (18) est constitué par un vérin d'actionnement.

10. Machine à encoller les chants selon la revendication 8, caractérisée en ce que l'organe de translation est constitué par un moteur électrique qui entraîne une vis coopérant avec l'organe pivotant (11).

11. Machine à encoller les chants selon l'une des revendications 8 à 10, caractérisée en ce que, pour la commande du déplacement en hauteur de l'organe pivotant (11), il est prévu un interrupteur de fin de course (28) solidaire du bâti de base (1), et qui peut être actionné par une plaque de commande (29) solidaire du pont (2).

12. Machine à encoller les chants selon l'une des revendications 1 à 11, caractérisée en ce que l'organe pivotant (11) peut être réglé en hauteur de telle manière que l'axe de pivotement (11') se trouve sensiblement au milieu de la pièce à usiner (3), et en ce qu'il est prévu une commande de course pouvant être activée par un capteur et qui détermine le point d'attaque de l'outil de fraisage (9) sur la pièce (3).
